# EUROPEAN PATENT SPECIFICATION

(11) **EP 3 074 737 B1**
(45) Date of publication and mention of the grant of the patent: **01.05.2019**
(21) Application number: 14783739.7
(22) Date of filing: 26.09.2014
(51) Int. Cl.: G01J 1/42, G01J 5/00, G01J 1/02, G01J 1/04, G01J 5/02

(54) **ULTRAVIOLET LIGHT FLAME DETECTOR**
FLAMMENDETEKTOR FÜR ULTRAVIOLETTES LICHT
DETECTEUR DE FLAMMES UTILISANT DU RAYONNEMENT ULTRAVIOLET

(30) Priority: 27.11.2013 US 201361909457 P
(43) Date of publication of application: 05.10.2016
(73) Proprietor: DETECTOR ELECTRONICS CORPORATION, Minneapolis MN 55438 (US)
(72) Inventor: FOLLETT, Gary, Minneapolis, Minnesota 55438 (US)
(74) Representative: Schmitt-Nilson Schraud Waibel Wohlfrom Patentanwälte Partnerschaft mbB
(86) International application number: PCT/US2014/057603
(87) International publication number: WO 2015/080795

(56) References cited:
- EP-A2- 0 234 595
- CN-A- 101 383 075
- JP-A- 2005 195 257
- JP-A- 2012 255 730

## Description

### BACKGROUND OF THE INVENTION

The subject invention relates to fire detection systems. More particularly, the subject invention relates to fire detection systems utilizing ultraviolet sensors.

Fire detection systems are available to sense various attributes of a fire and to warn individuals when a fire is detected. For example, smoke detectors include sensors adapted to sense smoke associated with a fire and to trigger an alarm when a selected level of smoke is detected. Other detectors sense other attributes associated with a fire.

Flame detector systems utilizing ultraviolet (UV) sensors are known. In a flame detector system, UV radiation emitted from the flames of a fire is detected by the detector's UV sensor. When a selected amount of UV radiation is detected, the flame detector system triggers an alarm.

UV flame detectors are tested periodically to ensure proper detector function. The test includes typically includes pulsing a small Neon/Hydrogen UV emitter to deliver short wavelength UV radiation pulses of a broad spectrum of wavelengths of about 180 nm to 350 nm to the UV photocell of the detector. The UV emitter is part of the detector, and as such, the UV radiation pulses are transmitted through a UV window of the detector, and reflected back through the UV window and to the UV photocell, producing a response in the UV photocell. If the response is not within an expected range, the detector goes into fault. Typically the Neon/Hydrogen UV emitter requires an amount of radioactive gas, such as Krypton 85, to ensure reliable function of the emitter in all required operating conditions, and within a very short time period, often less than 10msec. This is especially true when the UV emitter is stored in or operated in an environment of complete darkness, since no stray light is available to trigger operation of the UV emitter. Changes in international regulations surrounding the use and shipment of radioactive materials, such as Krypton 85, have made it difficult to ship UV emitters containing radioactive materials at a level that ensures reliable operation of the UV emitter.

JP 2005 195257 A provides a flame detecting device having a self-diagnosis function. The flame detecting device is composed of a sensor for detecting ultraviolet light generated from a flame of a combuster or the like; a signal processor for analyzing a signal from the sensor; a light emitting means for emitting light having a wavelength within the processing wavelength range of the detecting device such as the sensor and the signal processor; a light emitting means driving driver for driving the light emitting means; an optical system for guiding both the ultraviolet light generated from the flame of the combuster or the like and the ultraviolet light generated from the light emitting means; and a determination device for evaluating the soundness of the respective devices such as the sensor 1 according to signals from the light emitting means driving driver and a spectrum analyzer.

CN 101 383 075 A relates to an alarm and a method for detecting ultraviolet-infrared composite flame, and the alarm has the optical self-detection function and is characterized in that an infrared LED (Light-Emitting Diode) is connected with a band-pass amplifier circuit, and an ultraviolet LED and an ultraviolet photoelectric detection tube are connected with an intelligent ultraviolet driving and signal sampling circuit; the output end of a conversion circuit of a detector power supply is connected with an ultraviolet extraction and conversion circuit, and the output end of the intelligent ultraviolet driving and signal sampling circuit is connected with a main processing circuit of detector data; the output ends of an detector external signal input detection and self-detection infrared LED drive circuit and the main processing circuit of detector data are connected with the band-pass amplifier circuit, and the output ends of the main processing circuit of detector data and the conversion circuit of a detector power supply are connected a communication circuit of a detector isolation power supply, an output circuit of detector 4-20 mA signals and an output circuit of a detector relay. The invention has the advantages that flame signals are judged through ultraviolet-infrared mixture, decreases an error alarm rate, and improves the suitability of a detector to a use environment so as to achieve a higher intelligence degree.

### BRIEF DESCRIPTION

In one embodiment, a method of testing an ultraviolet (UV) flame detector includes the method steps of claim 5.

In one embodiment, a flame detector comprises the features of claim 1.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawing in which:
FIG 1 is a schematic view of an embodiment of a flame detector; and
FIG. 2 is another schematic view of an embodiment of a flame detector.

### DETAILED DESCRIPTION

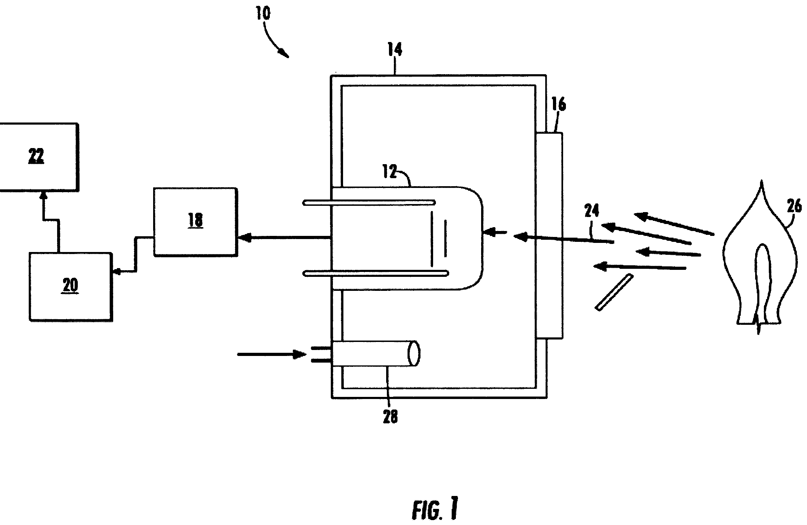

Shown in the FIG. 1 is an exemplary embodiment of a flame detector 10. The flame detector 10 includes a sensor, for example, an ultraviolet (UV) photocell 12 positioned in a housing 14 behind a UV window 16. The flame detector 10 further includes a controller 18 and a power supply 20 connected to the UV photocell 12, and further an alarm 22, such as a light, buzzer or other audible or visual alarm.

In operation, the photocell 12 detects UV radiation 24 emitted by a flame 26, through the UV window 16. The photocell 12 is configured to detect light in the UV wavelength range. Once a selected level of UV radiation 24 is detected by the photocell 12, the photocell 12 transmits an alarm signal to an electronic circuit in the controller 18. The alarm signal may be transmitted from the controller 18, to the power supply 20 to supply power to the alarm 22.

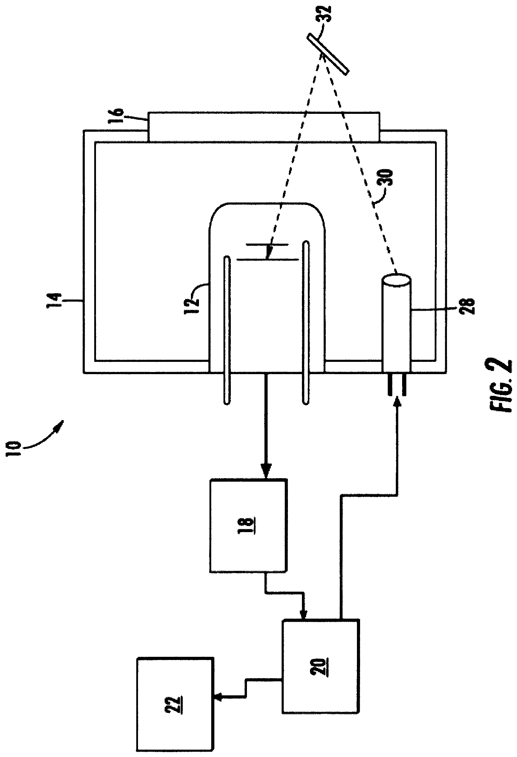

Referring now to FIG. 2, the flame detector 10 is periodically tested to ensure function and reliability of the flame detector 10. To do so, the flame detector 10 includes a UV emitter 28. UV test signal 30 from the UV emitter 28 is directed through the UV window 16 to an optical integrity (OI) mirror 32, which reflects the UV test light 30 back through the UV window 16 to the photocell 12. The photocell 12 detects the UV test signal 30 and transmits a signal to the controller 18 where this signal is compared with a setpoint. If the setpoint condition is not met, the controller 18 sets a fault condition in the detection system. This process tests the operation of the photocell 12 as well as transmission through and condition of the UV window 16. Since this UV light is generated at a known time, the alarm 22 is not activated and does not signal a state of fire emergency to the user. Rather, the failure to detect the proper level of UV light at this known time triggers a fault condition to alert the user of a failure in the detection system.

The UV emitter 28 of the embodiment of FIG. 2 is a UV light emitting diode (UVLED) emitter 28. According to the invention, the UVLED emitter 28 is configured to transmit UV test signal 30 in the wavelength of about 220 nM to about 240 nM. It is to be appreciated, however, that in examples not falling under the claims UV test signals 30 outside of this range may be utilized. In some embodiments, the UVLED emitter 28 is pulsed, or flashed at a rate of about 10 mSec per cycle.

The UVLED emitter 28 offers significant advantage over the prior art Neon/Hydrogen/Krypton UV emitter. First, it contains no radioactive materials thereby alleviating regulatory and shipping difficulties associated with radioactive materials. Further, the use of the UVLED emitter 28 makes the emitter less susceptible to faulty optical integrity evaluation. The optical integrity fault results from the presence of dust and/or other contaminants on the UV window 16. Contamination of the UV window 16 can scatter very short wavelength light transmitted from the emitter back to the photocell 12 without first reflecting off the OI mirror 32, thus resulting in an errant evaluation of occlusion of the UV window 16, because the detector erroneously evaluated the UV window 16 as not occluded. The UVLED emitter 28 transmits light at a slightly longer wavelength than the previous Neon/Hydrogen/Krypton emitter, which transmits at a broad spectrum of light from 180 to 240 nM in wavelength, thus reducing scattering of the UV test signal 30 by the contaminants on the UV window 16, thus making the test more reliable.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A flame detector (10) comprising:
an ultraviolet (UV) sensor (12), which is configured to detect UV radiation emitted by a flame (26); and
a testing apparatus, which is configured to periodically test function of the flame detector (10), including:
a UV light emitting diode (UVLED) emitter (28), which is configured to emit a test signal;
a mirror (32), which is configured to reflect the test signal emitted from the UVLED emitter (28) to the UV sensor (12); and
a UV window (16) interposed between the mirror (32) and the UV sensor (12) such that the test signal is reflected off the mirror (32) through the UV window (16); and
wherein the UV window (16) is interposed between the UVLED emitter (28) and the mirror (32) such that the test signal emitted from the UVLED emitter (28) is transmitted through the UV window (16) to the mirror (32);
**characterized in that** the UVLED emitter (28) is configured to transmit the test signal at a wavelength between 220 nm and 240 nm.

2. The flame detector (10) of Claim 1, wherein the UV sensor (12), the UVLED emitter (28) and the UV window (16) are disposed at a common housing (14).

3. The flame detector (10) of Claim 1, wherein the UV sensor (12) is a photocell.

4. The flame detector (10) of Claim 1, where the UVLED emitter (28) is devoid of radioactive materials.

5. A method of testing an ultraviolet (UV) flame detector (10) comprising an ultraviolet (UV) sensor to detect UV radiation emitted by a flame; the method comprising the steps of:
transmitting a test signal from a UV light emitting diode (UVLED) emitter (28);
reflecting the test signal toward a UV sensor (12) of the flame detector (10) by a mirror (32); and
evaluating the test signal received at the UV sensor (12);
wherein the test signal is transmitted from the UVLED emitter (28) through a UV window (16) interposed between the UVLED emitter (28) and the mirror (32); and
wherein test signal is reflected back through the window (16) toward the UV sensor (12);
**characterized in that** the UVLED emitter (28) is configured for transmitting the test signal at a wavelength between 220 nm and 240 nm..

6. The method of Claim 5, wherein the UV sensor (12), the UVLED emitter (28) and the UV window (16) are disposed at a common housing (14).

7. The method of Claim 5, wherein the UV sensor (12) is a photocell.

8. The method of Claim 5, where the UVLED emitter (28) is devoid of radioactive materials.

## Patentansprüche

1. Flammendetektor (10), umfassend:
einen Ultraviolett-(UV)-Sensor (12), der eingerichtet ist, UV-Strahlung, die von einer Flamme (26) emittiert wird, zu detektieren; und
eine Prüfvorrichtung, die eingerichtet ist, die Funktion des Flammendetektors (10) in regelmäßigen Abständen zu prüfen, umfassend:
einen UV-Licht emittierenden Dioden-(UVLED)-Emitter (28), der eingerichtet ist, ein Prüfsignal zu emittieren;
einen Spiegel (32), der eingerichtet ist, das Prüfsignal, das von dem UVLED-Emitter (28) emittiert wurde, zum UV-Sensor (12) zu reflektieren; und
ein UV-Fenster (16), das derart zwischen dem Spiegel (32) und dem UV-Sensor (12) eingefügt ist, dass das Prüfsignal von dem Spiegel (32) durch das UV-Fenster (16) reflektiert wird; und
wobei das UV-Fenster (16) derart zwischen dem UVLED-Emitter (28) und dem Spiegel (32) eingefügt ist, dass das Prüfsignal, das von dem UVLED-Emitter (28) emittiert wurde, durch das UV-Fenster (16) zu dem Spiegel (32) weitergeleitet wird;
**dadurch gekennzeichnet, dass** der UVLED-Emitter (28) eingerichtet ist, das Prüfsignal bei einer Wellenlänge zwischen 220 nm und 240 nm zu übertragen.

2. Flammendetektor (10) nach Anspruch 1, wobei der UV-Sensor (12), der UVLED-Emitter (28) und das UV-Fenster (16) an einem gemeinsamen Gehäuse (14) angeordnet sind.

3. Flammendetektor (10) nach Anspruch 1, wobei der UV-Sensor (12) eine Photozelle ist.

4. Flammendetektor (10) nach Anspruch 1, wobei der UVLED-Emitter (28) frei von radioaktiven Stoffen ist.

5. Verfahren zum Prüfen eines Ultraviolett-(UV)-Flammendetektors, der einen Ultraviolett-(UV)-Sensor umfasst, um UV-Strahlung zu detektieren, die von einer Flamme emittiert wird; wobei das Verfahren die folgenden Schritte umfasst:
Übertragen eines Prüfsignals von einem UV-Licht emittierenden Dioden-(UVLED)-Emitter (28);
Reflektieren des Prüfsignals zu einem UV-Sensor (12) des Flammendetektors durch einen Spiegel (32); und
Auswerten des am UV-Sensor (12) empfangenen Prüfsignals;
wobei das Prüfsignal von dem UVLED-Emitter (28) durch ein UV-Fenster (16) übertragen wird, das zwischen dem UVLED-Emitter (28) und dem Spiegel (32) eingefügt ist;
und
wobei das Prüfsignal durch das Fenster zurück zum UV-Sensor (12) reflektiert wird;
**dadurch gekennzeichnet, dass** der UVLED-Emitter (28) eingerichtet ist, das Prüfsignal bei einer Wellenlänge zwischen 220 nm und 240 nm zu übertragen.

6. Verfahren nach Anspruch 5, wobei der UV-Sensor (12), der UVLED-Emitter (28) und das UV-Fenster (16) an einem gemeinsamen Gehäuse (14) angeordnet sind.

7. Verfahren nach Anspruch 5, wobei der UV-Sensor (12) eine Photozelle ist.

8. Verfahren nach Anspruch 5, wobei der UVLED-Emitter (28) frei von radioaktiven Stoffen ist.

## Revendications

1. Détecteur de flammes (10) comprenant :
un capteur ultraviolet (UV) (12), qui est configuré pour détecter un rayonnement UV émis par une flamme (26) ; et
un appareil de test, qui est configuré pour tester périodiquement le fonctionnement du détecteur de flammes (10), comportant :
un émetteur à diode électroluminescente UV (UVLED) (28), qui est configuré pour émettre un signal de test ;
un miroir (32), qui est configuré pour réfléchir le signal de test émis de l'émetteur UVLED (28) au capteur UV (12) ; et
une fenêtre UV (16) interposée entre le miroir (32) et le capteur UV (12) de sorte que le signal de test est réfléchi par le miroir (32) à travers la fenêtre UV (16) ; et
dans lequel la fenêtre UV (16) est interposée entre l'émetteur UVLED (28) et le miroir (32) de sorte que le signal de test émis à partir de l'émetteur UVLED (28) est transmis à travers la fenêtre UV (16) vers le miroir (32) ;
**caractérisé en ce que** l'émetteur UVLED (28) est configuré pour transmettre le signal de test à une longueur d'onde entre 220 nm et 240 nm.

2. Détecteur de flammes (10) selon la revendication 1, dans lequel le capteur UV (12), l'émetteur UVLED (28) et la fenêtre UV (16) sont disposés au niveau d'un boîtier commun (14).

3. Détecteur de flammes (10) selon la revendication 1, dans lequel le capteur UV (12) est une cellule photoélectrique.

4. Détecteur de flammes (10) selon la revendication 1, dans lequel l'émetteur UVLED (28) est dépourvu de matières radioactives.

5. Procédé de test d'un détecteur de flammes (10) dans l'ultraviolet (UV) comprenant un capteur ultraviolet (UV) pour détecter un rayonnement UV émis par une flamme ; le procédé comprenant les étapes :
de transmission d'un signal de test à partir d'un émetteur à diode électroluminescente UV (UVLED) (28) ;
de renvoi du signal de test vers un capteur UV (12) du détecteur de flammes (10) par un miroir (32) ; et
d'évaluation du signal de test reçu au niveau du capteur UV (12) ;
dans lequel le signal de test est transmis à partir de l'émetteur UVLED (28) à travers une fenêtre UV (16) interposée entre l'émetteur UVLED (28) et le miroir (32) ; et
dans lequel le signal de test est réfléchi en retour à travers la fenêtre (16) vers le capteur UV (12) ;
**caractérisé en ce que** l'émetteur UVLED (28) est configuré pour transmettre le signal de test à une longueur d'onde entre 220 nm et 240 nm.

6. Procédé selon la revendication 5, dans lequel le capteur UV (12), l'émetteur UVLED (28) et la fenêtre UV (16) sont disposés au niveau d'un boîtier commun (14).

7. Procédé selon la revendication 5, dans lequel le capteur UV (12) est une cellule photoélectrique.

8. Procédé selon la revendication 5, dans lequel l'émetteur UVLED (28) est dépourvu de matières radioactives.
